# EUROPEAN PATENT SPECIFICATION

(11) **EP 2 245 931 B1**
(45) Date of publication and mention of the grant of the patent: **17.05.2017**
(21) Application number: 09703987.9
(22) Date of filing: 21.01.2009
(51) Int. Cl.: A01N 25/04, A01N 25/02, A01N 43/56, A01N 43/84, A01N 47/36, A01N 51/00

(54) **EMULSION COMPOSITION**
EMULSIONSZUSAMMENSETZUNG
COMPOSITION D'ÉMULSION

(30) Priority: 24.01.2008 JP 2008013514
(43) Date of publication of application: 03.11.2010
(73) Proprietor: SUMITOMO CHEMICAL COMPANY, LIMITED, Chuo-ku Tokyo 104-8260 (JP)
(72) Inventor: KOZUKI, Yumiko, Takarazuka-shi Hyogo 665-0836 (JP); TANIMOTO, Fumiaki, Toyonaka-shi Osaka 560-0021 (JP)
(74) Representative: Duckworth, Timothy John
(86) International application number: PCT/JP2009/051294
(87) International publication number: WO 2009/093743

(56) References cited:
- JP-A- 2007 091 619
- JP-A- 2007 091 691
- JP-A- 2008 050 343
- JP-A- 2008 081 430

## Description

### Technical Field

The present invention relates to an emulsifiable concentrate composition containing a plurality of organic solvents.

### Background Art

In an agrochemical formulation containing an agrochemically active compound, an emulsifiable concentrate composition is an easy-to-use important formulation. The emulsifiable concentrate composition is usually a homogeneous composition comprising an agrochemically active compound, a surfactant and an organic solvent and is used after diluting with a 5- to 10,000-fold amount of water. For the purpose of physical stabilization of an emulsifiable concentrate composition and a water-diluted liquid of the emulsifiable concentrate composition, an emulsifiable concentrate composition containing a plurality of organic solvents has been studied (see, for example, JP 2004-523491 A and JP 2002-501087 A).

### Disclosure of the Invention

However, it was difficult to obtain an emulsifiable concentrate composition containing a plurality of organic solvents which has improved low-temperature storage stability and has kept satisfactory emulsion stability after dilution.

Under these circumstances, the present inventors have intensively studied and found that an emulsifiable concentrate composition containing, as organic solvents, an aromatic hydrocarbon solvent, methyl oleate and 1,3-dimethyl-2-imidazolidinone as organic solvents in a specific ratio has satisfactory low-temperature storage stability and also has satisfactory emulsion stability in the state of a water-diluted liquid. Thus, the present invention has been completed.

That is, the present invention includes the following inventions.

### [Invention 1]

An emulsifiable concentrate composition comprising:
not less than 0.5% by weight but not more than 50% by weight of a hydrophobic agrochemically active compound selected from dicarboxyimide herbicidally active compounds, sulfonylurea herbicidally active compounds, 1-[(2-propenylthio)carbonyl]-2-(1-methylethyl)-4-(2-methylphenyl)-5-amino-1H-pyrazol-3-one, neonicotinoid insecticidally active compounds and 2,6-dichloro-4-(3,3-dichloroallyloxy)phenyl-3-[5-(trifluoromethyl)-2-pyridyloxy]propyl-ether
not less than 5% by weight but not more than 15% by weight of a surfactant,
not less than 2% by weight but not more than 60% by weight of an aromatic hydrocarbon solvent,
not less than 2% by weight but not more than 40% by weight of methyl oleate, and
not less than 12% by weight but not more than 90% by weight of 1,3-dimethyl-2-imidazolidinone, wherein
the weight ratio of 1,3-dimethyl-2-imidazolidinone to methyl oleate (1,3-dimethyl-2-imidazolidinone : methyl oleate) is within a range from 1 : 0.03 to 1 : 2.

### [Invention 2]

The emulsifiable concentrate composition according to Invention 1 which further comprises a formulation auxiliary in an amount of not more than 5% by weight based on the total amount and consists essentially of the hydrophobic agrochemically active compound, the surfactant, the aromatic hydrocarbon solvent, methyl oleate, 1,3-dimethyl-2-imidazolidinone and the formulation auxiliary.

### [Invention 3]

The emulsifiable concentrate composition according to Invention 1 or 2, wherein the weight ratio of 1,3-dimethyl-2-imidazolidinone to the aromatic hydrocarbon solvent is within a range from 1 : 0.02 to 1 : 1.5.

### [Invention 4]

The emulsifiable concentrate composition according to any one of Inventions 1 to 3, wherein the weight ratio of 1,3-dimethyl-2-imidazolidinone to methyl oleate is within a range from 1 : 0.05 to 1 : 1.5.

### [Invention 5]

The emulsifiable concentrate composition according to any one of Inventions 1 to 4, wherein the surfactant is composed of an anionic surfactant and a nonionic surfactant.

### [Invention 6]

The emulsifiable concentrate composition according to Invention 5, wherein the anionic surfactant is an alkylarylsulfonic acid salt.

### [Invention 7]

The emulsifiable concentrate composition according to any one of Inventions 1 to 6, wherein the hydrophobic agrochemically active compound is a neonicotinoid insecticidally active compound.

### [Invention 8]

The emulsifiable concentrate composition according to any one of Inventions 1 to 6, wherein the hydrophobic agrochemically active compound is at least one compound selected from the group consisting of sulfonylurea herbicidally active compounds and dicarboxyimide herbicidally active compounds.

### [Invention 9]

A water-diluted liquid which is obtained by diluting the emulsifiable concentrate composition according to any one of Inventions 1 to 8, 5 to 10,000 times with water.

### Effects of the Invention

The emulsifiable concentrate composition of the present invention (hereinafter referred to as the present emulsifiable concentrate composition) has satisfactory low-temperature storage stability and has satisfactory emulsion stability in the state of a water-diluted liquid, and also has excellent properties required as a formulation containing an agrochemically active compound.

### Best Mode for Carrying Out the Invention

In the present invention, usually, the hydrophobic agrochemically active compound means an agrochemically active compound having the solubility in water at 25°C of less than 1,000 ppm. The hydrophobic agrochemically active compound would be in the form of either a solid or a liquid at 25°C.

Examples of the agrochemically active compound include:
dicarboxyimide herbicidally active compounds such as flumiclorac-pentyl [herbicide compound 1], flumioxazin [herbicide compound 2] and cinidon-ethyl [herbicide compound 3];
sulfonylurea herbicidally active compounds such as sulfosulfuron [herbicide compound 16], imazosulfuron [herbicide compound 17], nicosulfuron [herbicide compound 18], primisulfuron-methyl [herbicide compound 19], rimsulfuron [herbicide compound 20], halosulfuron-methyl [herbicide compound 21], prosulfuron [herbicide compound 22] and thifensulfuron-methyl [herbicide compound 23];
The pyridine fungicidally active compound 1-[(2-propenylthio)carbonyl]-2-(1-methylethyl)-4-(2-methylphenyl)-5-amino-1H-pyrazol-3-one [fungicide compound 58];
neonicotinoid insecticidally active compounds such as clothianidin [insecticide compound 37], imidacloprid [insecticide compound 38], thiamethoxam [insecticide compound 39] and thiacloprid [insecticide compound 40];
juvenile hormone like insecticidally active compound 2,6-dichloro-4-(3,3-dichloroallyloxy)phenyl=3-[5-(trifluoromethyl)-2-pyridyloxy]propyl=ether [insecticide compound 54].

The agrochemically active compounds described above are those described in known documents such as The Pesticide Manual, 13th Edition (published in 1987 by The British Crop Protection Council).

In the present invention, the hydrophobic agrochemically active compound is preferably at least one of the compounds selected from the group consisting of sulfonylurea herbicidally active compounds and dicarboxyimide herbicidally active compounds, or neonicotinoid insecticidally active compounds.

Although the hydrophobic agrochemically active compound contained in the present emulsifiable concentrate composition is not limited to one compound, the total amount of the hydrophobic agrochemically active compounds is 0.5% by weight or more and 50% by weight or less in the present emulsifiable concentrate composition.

In the present invention, the surfactant can be any of anionic surfactants, nonionic surfactants and cationic surfactants, and surfactants composed of an anionic surfactant and a nonionic surfactant are preferred. More preferably, the weight ratio of an anionic surfactant to a nonionic surfactant is within a range from 1 : 0.1 to 1 : 10.

Examples of the anionic surfactant include alkylarylsulfonic acid salts such as dodecylbenzenesulfonic acid salts; polyoxyethylene (poly)aryl aryl ether sulfuric acid esters such as polyoxyethylene distyryl phenyl ether sulfuric acid; polyoxyethylene (poly)aryl aryl ether phosphoric acid esters such as polyoxyethylene tristyryl phenyl ether phosphoric acid; polyoxyethylene alkyl aryl phosphoric acid esters and polyoxyethylene alkyl phosphoric acid esters. The anionic surfactant is preferably an alkylarylsulfonic acid salt, and particularly a dodecylbenzenesulfonic acid salt (sodium salt and calcium salt).

In general, examples of the cation in the sulfonic acid salt, sulfuric acid ester salt and phosphoric acid ester salt include sodium, calcium and ammonium ions.

As the dodecylbenzenesulfonic acid salt, for example, commercially available surfactants such as Rhodacal 70^{™}, Rhodacal 70/C^{™} and Rhodacal 60/BE-C^{™} (each one is manufactured by Rhodia Nikka Co., Ltd.) can be used.

As the polyoxyethylene distyryl phenyl ether sulfuric acid, for example, commercially available surfactants such as Soprophor DSS/7^{™} (manufactured by Rhodia Nikka Co., Ltd.) can be used. As the polyoxyethylene tristyryl phenyl ether phosphoric acid, for example, commercially available surfactants such as Soprophor FLK^{™} (manufactured by Rhodia Nikka Co., Ltd.) can be used. As the polyoxyethylene alkyl aryl phosphoric acid ester, commercially available surfactants such as Rhodafac PS/17^{™} (manufactured by Rhodia Nikka Co., Ltd.) can be used. As the polyoxyethylene alkyl phosphoric acid ester, commercially available surfactants such as Rhodafac MB^{™} (manufactured by Rhodia Nikka Co., Ltd.) can be used.

Examples of the nonionic surfactant include polyoxyethylene-polyoxypropylene block polymers, fatty acid esters of polyoxyethylene-polyoxypropylene block polymers, polyoxyethylene polyoxypropylene alkyl ethers, polyoxyethylene polyoxypropylene polyaryl ethers, polyoxyethylene polyoxypropylene alkyl aryl ethers, polyoxyethylene alkyl aryl ethers, polyoxyethylene polyaryl ethers, polyoxyethylene vegetable oils such as polyoxyethylene castor oil, polyoxyethylene hydrogenated vegetable oils such as polyoxyethylene hydrogenated castor oil, polyoxyethylene polyoxypropylene vegetable oils such as polyoxyethylene polyoxypropylene castor oil, polyoxyethylene fatty acid esters, polyoxyethylene alkyl ethers, polyoxyethylene tristyryl phenyl phosphate diester, polyoxyethylene polyoxypropylene tristyryl phenyl phosphate diester, fatty acid alcohol polyglycol ethers and glycerin fatty acid esters, and preferably a polyoxyethylene-polyoxypropylene block polymers, fatty acid esters of polyoxyethylene-polyoxypropylene block polymers, polyoxyethylene vegetable oils, polyoxyethylene hydrogenated vegetable oils, polyoxyethylene alkyl aryl ethers, polyoxyethylene tristyryl phenyl phosphate diester and polyoxyethylene polyoxypropylene tristyryl phenyl phosphate diester, and more preferably a polyoxyethylene-polyoxypropylene block polymers and fatty acid esters of polyoxyethylene-polyoxypropylene block polymers.

As the polyoxyethylene-polyoxypropylene block polymer, commercially available surfactants such as Toximul 8320^{™} (manufactured by Stepan Company) can be used.

As the polyoxyethylene polyoxypropylene alkyl ether, commercially available surfactants such as Antarox BO/327^{™}, 340^{™} and Antarox BO^{™} series (each one is manufactured by Rhodia Nikka Co., Ltd.) can be used.

As the polyoxyethylene alkyl aryl ether, commercially available surfactants such as Sorpol T/26^{™} (manufactured by Toho Chemical Industry Co., Ltd.) can be used.

As the polyoxyethylene castor oil, commercially available surfactants such as Alkamuls OR/40^{™} and Alkamuls BR^{™} (each one is manufactured by Rhodia Nikka Co., Ltd.) can be used.

As the polyoxyethylene hydrogenated castor oil, commercially available surfactants such as HCO-20^{™} (manufactured by Nikko Chemicals Co., Ltd.) can be used.

As the polyoxyethylene polyoxypropylene castor oil, commercially available surfactants, for example, CR series such as Antarox CR/255^{™} and CR/405^{™} (each one is manufactured by Rhodia Nikka Co., Ltd.) can be used.

As the polyoxyethylene fatty acid ester, commercially available surfactants such as Newcol 150^{™} (manufactured by Nippon Nyukazai Co., Ltd.) can be used.

As the polyoxyethylene alkyl ether, commercially available surfactants such as Newcol 1100^{™} and Newcol 1105^{™} (each one is manufactured by Nippon Nyukazai Co., Ltd.) can be used.

As the glycerin fatty acid ester, commercially available surfactants such as Pionin D-900^{™} series (manufactured by Takemoto Oil & Fat Co., Ltd.) can be used.

In the present emulsifiable concentrate composition, the total amount of the surfactants is within a range from 4 to 15% by weight, and preferably from 5 to 15% by weight. When the surfactants are composed of an anionic surfactant and a nonionic surfactant, the amount of the anionic surfactant is not less than 2% by weight but not more than 12% by weight, and also the amount of the nonionic surfactant is not less than 2% by weight but not more than 12% by weight.

In the present invention, examples of the aromatic hydrocarbon solvent include alkylbenzenes (e.g. toluene, ethylbenzene, xylene and tetramethylbenzene), alkylnaphthalenes (e.g. methylnaphthalene), diphenylethane, dixylylethane, phenylxylylethane, and a mixture thereof.

The aromatic hydrocarbon solvent can also be a commercially available product. Examples of the commercially available solvent include Hisol SAS-296 (a mixture of 1-phenyl-1-xylylethane and 1-phenyl-1-ethylphenylethane, trade name of Nippon Oil Corporation), Cactus Solvent HP-MN (methylnaphthalene 80%, trade name of Japan Energy Corporation), Cactus Solvent HP-DMN (dimethylnaphthalene 80%, trade name of Japan Energy Corporation), Cactus Solvent P-100 (alkylbenzene having 9 to 10 carbon atoms, trade name of Japan Energy Corporation), Cactus Solvent P-150 (alkylbenzene, trade name of Japan Energy Corporation), Cactus Solvent P-180 (a mixture of methylnaphthalene and dimethylnaphthalene, trade name of Japan Energy Corporation), Cactus Solvent P-200 (a mixture of methylnaphthalene and dimethylnaphthalene, trade name of Japan Energy Corporation), Cactus Solvent P-220 (a mixture of methylnaphthalene and dimethylnaphthalene, trade name of Japan Energy Corporation), Cactus Solvent PAD-1 (dimethyl-monoisopropylnaphthalene, trade name of Japan Energy Corporation), Solvesso 100 (mainly composed of, as aromatic hydrocarbons, C9-C10 dialkyl and trialkylbenzene, trade name of Exxon Mobil Corporation), Solvesso 150 (mainly composed of, as aromatic hydrocarbons, C10-C11 alkylbenzene, trade name of Exxon Mobil Corporation), Solvesso 150ND (mainly composed of, as aromatic hydrocarbons, C10-C11 alkylbenzene, trade name of Exxon Mobil Chemical Company), Solvesso 200 (mainly composed of, as aromatic hydrocarbons, C10-C14 alkylnaphthalene, trade name of Exxon Mobil Corporation), Solvesso 200ND (mainly composed of, as aromatic hydrocarbons, C10-C14 alkylnaphthalene, trade name of Exxon Mobil Chemical Company), Ultra Low Naphthalene Aromatic 150 (mainly composed of, as aromatic hydrocarbons, C10-C11 alkylbenzene, trade name of Exxon Mobil Chemical Company), Ultra Low Naphthalene Aromatic 200 (mainly composed of, as aromatic hydrocarbons, C10-C14 alkylnaphthalene, trade name of Exxon Mobil Chemical Company), Swasol 100 (toluene, trade name of Maruzen Petrochemical Co., Ltd.) and Swasol 200 (xylene, trade name of Maruzen Petrochemical Co., Ltd.).

In the present emulsifiable concentrate composition, the total amount of the aromatic hydrocarbon solvent is within a range of not less than 2% by weight but not more than 60% by weight.

In the present invention, commercially available methyl oleate and 1,3-dimethyl-2-imidazolidinone can be used.

In the present emulsifiable concentrate composition, the amount of methyl oleate is within a range of not less than 2% by weight but not more than 40% by weight, and preferably not more than 30% by weight, while the amount of 1,3-dimethyl-2-imidazolidinone is within a range of not less than 12% by weight but not more than 90% by weight.

In the present emulsifiable concentrate composition, the weight ratio of 1,3-dimethyl-2-imidazolidinone to methyl oleate (1,3-dimethyl-2-imidazolidinone : methyl oleate, the same shall be applied to hereinafter) is within a range from 1 : 0.03 to 1 : 2, preferably from 1 : 0.05 to 1 : 1.5, and more preferably from 1 : 0.05 to 1 : 1.0.

In the present emulsifiable concentrate composition, the weight ratio of 1,3-dimethyl-2-imidazolidinone to the aromatic hydrocarbon solvent is preferably within a range from 1 : 0.02 to 1 : 1.5, and more preferably from 1 : 0.02 to 1 : 1.0.

A mixed solvent containing the aromatic hydrocarbon solvent, methyl oleate and 1,3-dimethyl-2-imidazolidinone, wherein the ratio of the aromatic hydrocarbon solvent and methyl oleate being within the above ratio, is useful as an organic solvent for an agrochemical formulation, particularly an emulsifiable concentrate composition.

The present emulsifiable concentrate composition can contain a formulation auxiliary such as antioxidants, coloring agents, fragment materialss, enhancers and safeners, if necessary.

Examples of the antioxidants include 3-/2-t-butyl-4-hydroxyanisole and butylated hydroxytoluene, and examples of the coloring agent include Rhodamine B, Yellow No. 4, Blue No. 1 and Red No. 2.

In the present emulsifiable concentrate composition, the total amount of the formulation auxiliary is within a range from 0 to 5% by weight.

Embodiments of the present emulsifiable concentrate composition are as follows wherein the hydrophobic agrochemically active compound is as defined above.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.0.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0,05 to 1 : 0.5.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent, 2 to 40% by weight of methyl oleate,
12 to 90% by weight of 1,3-dimethyl-2-imidazolidinone, and
0 to 5% by weight of a formulation auxiliary,
the weight ratio of 1,3-dimethyl-2-imidazolidinone to methyl oleate is within a range from 1 : 0.05 to 1 : 1.0.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 0.5.

An emulsifiable concentrate composition consists essentially of:
0.5 to 50% by weight of a hydrophobic agrochemically active compound,
5 to 15% by weight of a combination of an alkylarylsulfonic acid and a polyoxyethylene-polyoxypropylene block polymer,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a combination of an alkylarylsulfonic acid and a polyoxyethylene-polyoxypropylene block polymer,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.0.

An emulsifiable concentrate composition consists essentially of:
0.5 to 50% by weight of a hydrophobic agrochemically active compound,
5 to 15% by weight of a combination of an alkylarylsulfonic acid and a polyoxyethylene-polyoxypropylene block polymer,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 0.5.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 1.0.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 0.5.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 1.0.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 0.5.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.0, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 0.5, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.0, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a combination of an anionic surfactant and a nonionic surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 0.5, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a combination of an alkylarylsulfonic acid and a polyoxyethylene-polyoxypropylene block polymer,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of a hydrophobic agrochemically active compound,
5 to 15% by weight of a combination of an alkylarylsulfonic acid and a polyoxyethylene-polyoxypropylene block polymer,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 1.0.

An emulsifiable concentrate composition consists essentially of:
0.5 to 50% by weight of a hydrophobic agrochemically active compound,
5 to 15% by weight of a combination of an alkylarylsulfonic acid and a polyoxyethylene-polyoxypropylene block polymer,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.02 to 1 : 1.5, and
the weight ratio of 1,3-dimethyl-2-imidazolidinone to methyl oleate is within a range from 1 : 0.05 to 1 : 0.5.

An emulsifiable concentrate composition consists essentially of:
0.5 to 50% by weight of herbicide compound 1,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of herbicide compound 2,
5 to 15% by weight of a surfactant,
2 to 60% by weight of an aromatic hydrocarbon solvent, 2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of herbicide compound 17,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of fungicide compound 58,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of insecticide compound 37,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

An emulsifiable concentrate composition consists essentially of:
0.5 to 50% by weight of insecticide compound 54,
5 to 15% by weight of a surfactant,
2 to 60% by weight of an aromatic hydrocarbon solvent,
2 to 40% by weight of methyl oleate,
12 to 90% by weight of 1,3-dimethyl-2-imidazolidinone, and
0 to 5% by weight of a formulation auxiliary, wherein
the weight ratio of 1,3-dimethyl-2-imidazolidinone to methyl oleate is within a range from 1 : 0.05 to 1 : 1.5.

The present emulsifiable concentrate composition can be produced, for example, by adding a hydrophobic agrochemically active compound, a surfactant, and a formulation auxiliary which is an optionally added ingredient to a mixture of an aromatic hydrocarbon solvent, methyl oleate and 1,3-dimethyl-2-imidazolidinone, if necessary, under heating (about 80°C or lower) conditions, stirring the mixture to form a homogeneous mixture and then, if necessary, filtering the mixture.

The present emulsifiable concentrate composition is a homogeneous liquid composed of a substantially single continuous phase.

The present emulsifiable concentrate composition is used after diluting with water. The present emulsifiable concentrate composition can be usually diluted with a 5- to 10,000-fold amount, preferably a 8- to 5,000-fold amount of water. In general, the water to be used for dilution can be either hard water or soft water, further it may be water which is added an adjuvant such as a spreader.

### Examples

Hereinafter, the present invention will be described in more detail by way of Preparation Examples and Test Examples. Ingredients used in Examples are as follows:
Anionic surfactant A: calcium dodecylbenzenesulfonate (Witconate P-18 60^{™}, manufactured by Akzo Nobel);
Anionic surfactant B: calcium dodecylbenzenesulfonate (Ninate 401-A^{™}, manufactured by Stepan Company);
Anionic surfactant C: calcium dodecylbenzenesulfonate (Agnique ABS 70CB^{™}, manufactured by Cognis);
Anionic surfactant D: calcium dodecylbenzenesulfonate (Rhodacal70/C^{™}, manufactured by Rhodia);
Anionic surfactant E: calcium dodecylbenzenesulfonate (NewKalgen AD-85C^{™}, manufactured by Takemoto Oil & Fat Co., Ltd.);
Anionic surfactant F: calcium dodecylbenzenesulfonate (Sorpol EX-15^{™}, manufactured by Toho Chemical Industry Co., Ltd.);
Nonionic surfactant A: polyoxyethylene-polyoxypropylene block polymer (Toximul 8320^{™}, manufactured by Stepan Company);
Nonionic surfactant B: polyoxyethylene castor oil (Toximul 8240^{™}, manufactured by Stepan Company);
Nonionic surfactant C: polyoxyethylene polyoxypropylene alkyl ether (Berol 994^{™}, manufactured by Akzo Nobel);
nonionic surfactant D: polyoxyethylene alkyl ether (Ethlan NS-70^{™}, manufactured by Akzo Nobel);
Nonionic surfactant E: polyoxyethylene polyoxypropylene tristyryl phenyl ether (Soprophor TSP/724^{™}, manufactured by Rhodia);
Nonionic surfactant F: polyoxyethylene alkyl ether (Pegnol TH-8^{™}, manufactured by Toho Chemical Industry Co., Ltd.);
Nonionic surfactant G: polyoxyethylene alkyl ether (Pegnol ST-7^{™}, manufactured by Toho Chemical Industry Co., Ltd.);
Aromatic hydrocarbon solvent A: Solvesso 200ND^{™} (mainly C10-14 alkylnaphthalenes, manufactured by Exxon Mobil Chemical);
Aromatic hydrocarbon solvent B: Solvesso 150^{™} (mainly C10-11 alkylbenzenes, manufactured by Exxon Mobil Corporation);
Aromatic hydrocarbon solvent C: Solvesso 200^{™} (mainly C10-14 alkylnaphthalenes, manufactured by Exxon Mobile Corporation);
Aromatic hydrocarbon solvent D: Solvesso 150ND^{™} (mainly C10-11 alkylbenzenes, manufactured by Exxon Mobil Chemical Company);
MO: methyl oleate (manufactured by Kao Corporation);
DMI: 1,3-dimethyl-2-imidazolidinone (manufactured by Mitsui Chemicals, Inc.).

### Preparation Example 1

In a 100 ml measuring flask, 5.0 g of a herbicide compound 2, 3.0 g of anionic surfactant A, 3.0 g of nonionic surfactant A, 35.0 g of DMI and 20.0 g of aromatic hydrocarbon solvent A were put at room temperature, and MO (corresponding to about 34 g) was added to make the total volume to 100 ml. The mixture was stirred with warming (about 50°C) to form a homogeneous mixture, thereby preparing an emulsifiable concentrate composition of Example 1 (the present emulsifiable concentrate composition 1).

### Preparation Examples 2 to 12

According to the same procedure as that described in Preparation Example 1, emulsifiable concentrate compositions of Examples 2 to 12 (the present emulsifiable concentrate compositions 2 to 12) were prepared at ratios of ingredients shown in Table 1 to Table 3, respectively.

**Table 1**

| | Example 1 | Example 2 | Example 3 | Example 4 |
|---|---|---|---|---|
| Herbicide compound 2 | 5.0 | 5.0 | | |
| Fungicide compound 58 | | | 5.0 | 5.0 |
| Anionic surfactant A | 3.0 | 3.0 | 3.0 | 3.0 |
| Nonionic surfactant A | 3.0 | 3.0 | 3.0 | 3.0 |
| MO | ca 34(*) | ca 19(*) | ca 34(*) | ca 19(*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The ingredient was added in the amount shown in the table to make the total volume to 100 ml. | | | | |

**Table 2**

| | Example 5 | Example 6 | Example 7 | Example 8 |
|---|---|---|---|---|
| Insecticide compound 37 | 5.0 | 5.0 | | |
| Herbicide compound 17 | | | 5.0 | 5.0 |
| Anionic surfactant A | 3.0 | 3.0 | 3.0 | 3.0 |
| Nonionic surfactant A | 3.0 | 3.0 | 3.0 | 3.0 |
| MO | ca 34(*) | ca 19(*) | ca 34(*) | ca 19(*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The ingredient was added in the amount shown in the table to make the total volume to 100 ml. | | | | |

**Table 3**

| | Example 9 | Example 10 | Example 11 | Example 12 |
|---|---|---|---|---|
| Herbicide compound 2 | 5.0 | 5.0 | 5.0 | 5.0 |
| Anionic surfactant A | 6.0 | 6.0 | 6.0 | 6.0 |
| Nonionic surfactant A | 6.0 | 6.0 | 6.0 | 6.0 |
| MO | ca 38(*) | ca 8(*) | ca 23(*) | ca 3(*) |
| DMI | 35.0 | 35.0 | 50.0 | 50.0 |
| Aromatic hydrocarbon solvent A | 10.0 | 40.0 | 10.0 | 30.0 |

| | | | | |
|---|---|---|---|---|
| *: The ingredient was added in the amount shown in the table to make the total volume to 100 ml. | | | | |

### Test Example 1 (Storage at low temperature)

Ten ml of each of the emulsifiable concentrate compositions of Examples 1 to 12 (the present emulsifiable concentrate compositions 1 to 12) was sealed in a 20 ml ampoule tube. After storing at 0°C for 1 week, changes in appearance were visually observed. All of the present emulsifiable concentrate compositions were transparent and clear liquids even after storage, and a sediment was scarcely observed.

### Test Example 2 (Emulsion stability)

One ml of each of the emulsifiable concentrate compositions of Examples 1 to 12 (present emulsifiable concentrate compositions 1 to 12) was diluted 100 times with CIPAC Standard Water A (total concentration of calcium and magnesium ions: 20 ppm) in a 100 ml measuring cylinder with stopper. After allowing to stand at 30°C for 0.5 hours, the state was visually observed. Each water-diluted liquid was kept in a stable emulsified state.

### Test Example 3 (Emulsion stability)

One ml of each of the emulsifiable concentrate compositions of Examples 1 to 12 (present emulsifiable concentrate compositions 1 to 12) was diluted 100 times with CIPAC Standard Water D (total concentration of calcium and magnesium ions: 342 ppm) in a 100 ml measuring cylinder with stopper. After allowing to stand at 30°C for 0.5 hours, the state was visually observed. Each water-diluted liquid was kept in a stable emulsified state.

### Preparation Examples 13 to 28

According to the same procedure as that in Preparation Example 1, emulsifiable concentrate compositions of Examples 13 to 28 (the present emulsifiable concentrate compositions 13 to 28) were prepared at ratios of ingredients shown in Table 4 to Table 7 except that an aromatic hydrocarbon was added in place of MO to make the total volume of each composition to 100 ml.

**Table 4**

| | Example 13 | Example 14 | Example 15 | Example 16 |
|---|---|---|---|---|
| Insecticide compound 37 | 8.0 | 8.0 | 8.0 | 8.0 |
| Insecticide compound | 16.0 | 16.0 | 16.0 | 16.0 |
| 54 | | | | |
| Anionic surfactant A | 4.0 | 4.0 | | |
| Nonionic surfactant B | | | 4.0 | |
| Anionic surfactant C | | | | 4.0 |
| Nonionic surfactant A | 4.0 | | 4.0 | 4.0 |
| Nonionic surfactant B | | 4.0 | | |
| MO | 10.0 | 10.0 | 10.0 | 10.0 |
| DMI | 32.0 | 32.0 | 32.0 | 54.0 |
| Aromatic hydrocarbon B | ca 26(*) | ca 26(*) | ca 26(*) | ca 4(*) |

| | | | | |
|---|---|---|---|---|
| *: The ingredient was added in the amount shown in the table to make the total volume to 100 ml. | | | | |

**Table 5**

| | Example 17 | Example 18 | Example 19 | Example 20 |
|---|---|---|---|---|
| Insecticide compound 37 | 8.0 | 8.0 | 8.0 | 8.0 |
| Insecticide compound 54 | 16.0 | 16.0 | 16.0 | 40.0 |
| Anionic surfactant C | 4.0 | 4.0 | 4.0 | 4.0 |
| Nonionic surfactant A | 4.0 | | | 4.0 |
| Nonionic surfactant C | | 4.0 | | |
| Nonionic surfactant D | | | 4.0 | |
| MO | 10.0 | 10.0 | 10.0 | 20.0 |
| DMI | 34.0 | 34.0 | 34.0 | 35.0 |
| Aromatic hydrocarbon solvent C | ca 24(*) | ca 24(*) | ca 24(*) | |
| Aromatic hydrocarbon solvent D | | | | ca 1(*) |

| | | | | |
|---|---|---|---|---|
| *: The ingredient was added in the amount shown in the table to make the total volume to 100 ml. | | | | |

**Table 6**

| | Example 21 | Example 22 | Example 23 | Example 24 |
|---|---|---|---|---|
| Insecticide compound 37 | 8.0 | 8.0 | 8.0 | 8.0 |
| Insecticide compound 54 | 16.0 | 16.0 | 40.0 | 40.0 |
| Anionic surfactant B | 3.0 | 3.0 | 3.0 | 3.0 |
| Nonionic surfactant A | 3.0 | 2.0 | 4.0 | 4.0 |
| Nonionic surfactant D | 2.0 | 3.0 | 1.0 | 1.0 |
| MO | 10.0 | 10.0 | 10.0 | 10.0 |
| DMI | 34.0 | 34.0 | 35.0 | 35.0 |
| Aromatic hydrocarbon solvent A | | | ca 11(*) | |
| Aromatic hydrocarbon solvent B | | | | ca 11(*) |
| Aromatic hydrocarbon solvent C | ca 24(*) | ca 24(*) | | |

| | | | | |
|---|---|---|---|---|
| *: The ingredient was added in the amount shown in the table to make the total volume to 100 ml. | | | | |

**Table 7**

| | Example 25 | Example 26 | Example 27 | Example 28 |
|---|---|---|---|---|
| Insecticide compound 37 | 8.0 | 8.0 | 8.0 | 8.0 |
| Insecticide compound 54 | 40.0 | 10.0 | 10.0 | 5.0 |
| Anionic surfactant D | 4.0 | 3.0 | | |
| Anionic surfactant E | | | 4.0 | |
| Anionic surfactant F | | | | 4.0 |
| Nonionic surfactant C | 6.0 | 3.0 | | |
| Nonionic surfactant D | | 3.0 | | |
| Nonionic surfactant F | | | 6.0 | |
| Nonionic surfactant G | | | | 6.0 |
| MO | 16.0 | 10.0 | 10.0 | 10.0 |
| DMI | 35.0 | 35.0 | 35.0 | 35.0 |
| Aromatic hydrocarbon solvent B | | | 27.0 | 32.0 |
| Aromatic hydrocarbon solvent D | ca 3(*) | ca 28(*) | | |

| | | | | |
|---|---|---|---|---|
| *: The ingredient was added in the amount shown in the table to make the total volume to 100 ml. | | | | |

### Test Example 4 (Emulsion stability)

One ml of each of the emulsifiable concentrate compositions of Examples 13 to 28 (the present emulsifiable concentrate compositions 13 to 28) was diluted 20 times with CIPAC Standard Water A (total concentration of calcium and magnesium ions: 20 ppm) in a 100 ml measuring cylinder with stopper. After allowing to stand at 30°C for 0.5 hours, the state was visually observed. Each water-diluted liquid was kept in a stable emulsified state.

### Test Example 5 (Emulsion stability)

One ml of each of the emulsifiable concentrate compositions of Examples 13 to 28 (the present emulsifiable concentrate compositions 13 to 28) was diluted 20 times with CIPAC Standard Water D (total concentration of calcium and magnesium ions: 342 ppm) in a 100 ml measuring cylinder with stopper. After allowing to stand at 30°C for 0.5 hours, the state was visually observed. Each water-diluted liquid was kept in a stable emulsified state.

### Industrial Applicability

The present emulsifiable concentrate composition has satisfactory formulation stability under low temperature conditions, and also has satisfactory emulsion stability in the state of a water-diluted liquid, and is therefore useful as a formulation containing an agrochemically active compound.

## Claims

1. An emulsifiable concentrate composition comprising:
not less than 0.5% by weight but not more than 50% by weight of a hydrophobic agrochemically active compound selected from dicarboxyimide herbicidally active compounds, sulfonylurea herbicidally active compounds, 1-[(2-propenylthio)carbonyl]-2-(1-methylethyl)-4-(2-methylphenyl)-5-amino-1H-pyrazol-3-one, neonicotinoid insecticidally active compounds and 2,6-dichloro-4-(3,3-dichloroallyloxy)phenyl-3-[5-(trifluoromethyl)-2-pyridyloxy]propyl-ether,
not less than 5% by weight but not more than 15% by weight of a surfactant,
not less than 2% by weight but not more than 60% by weight of an aromatic hydrocarbon solvent,
not less than 2% by weight but not more than 40% by weight of methyl oleate, and
not less than 12% by weight but not more than 90% by weight of 1,3-dimethyl-2-imidazolidinone, wherein
the weight ratio of 1,3-dimethyl-2-imidazolidinone to methyl oleate (1,3-dimethyl-2-imidazolidinone : methyl oleate) is within a range from 1 : 0.03 to 1 : 2.

2. The emulsifiable concentrate composition according to claim 1 which further comprises a formulation auxiliary in an amount of not more than 5% by weight based on the total amount and consists essentially of the hydrophobic agrochemically active compound, the surfactant, the aromatic hydrocarbon solvent, methyl oleate, 1,3-dimethyl-2-imidazolidinone and the formulation auxiliary.

3. The emulsifiable concentrate composition according to claim 1 or 2, wherein the weight ratio of 1,3-dimethyl-2-imidazolidinone to the aromatic hydrocarbon solvent is within a range from 1 : 0.02 to 1 : 1.5.

4. The emulsifiable concentrate composition according to any one of claims 1 to 3, wherein the weight ratio of 1,3-dimethyl-2-imidazolidinone to methyl oleate is within a range from 1 : 0.05 to 1 : 1.5.

5. The emulsifiable concentrate composition according to any one of claims 1 to 4, wherein the surfactant is composed of an anionic surfactant and a nonionic surfactant.

6. The emulsifiable concentrate composition according to claim 5, wherein the anionic surfactant is an alkylarylsulfonic acid salt.

7. The emulsifiable concentrate composition according to any one of claims 1 to 6, wherein the hydrophobic agrochemically active compound is a neonicotinoid insecticidally active compound.

8. The emulsifiable concentrate composition according to any one of claims 1 to 6, wherein the hydrophobic agrochemically active compound is at least one compound selected from the group consisting of sulfonylurea herbicidally active compounds and dicarboxyimide herbicidally active compounds.

9. A water-diluted liquid which is obtained by diluting the emulsifiable concentrate composition according to any one of claims 1 to 8 with water 5 to 10,000 times.

## Patentansprüche

1. Eine emulgierbare Konzentratzusammensetzung, umfassend:
nicht weniger als 0,5 Gew.-%, aber nicht mehr als 50 Gew.-% einer hydrophoben agrochemisch aktiven Verbindung, ausgewählt aus als Herbizid wirksamen Verbindungen vom Dicarboxyimid-Typ, als Herbizid wirksamen Verbindungen vom Sulfonylharnstoff Typ, 1-[(2-Propenylthio)carbonyl]-2-(1-methylethyl)-4-(2-methylphenyl)-5-amino-1H-pyrazol-3-on, als Insektizid wirksamen Verbindungen vom Neonicotinoid-Typ und 2,6-Dichlor-4-(3,3-dichlorallyloxy)phenyl-3-[5-(trifluormethyl)-2-pyridyloxy]propyl-ether,
nicht weniger als 5 Gew.-%, aber nicht mehr als 15 Gew.-% einer grenzflächenaktiven Verbindung,
nicht weniger als 2 Gew.-%, aber nicht mehr als 60 Gew.-% eines aromatischen Kohlenwasserstofflösungsmittels,
nicht weniger als 2 Gew.-%, aber nicht mehr als 40 Gew.-% Ölsäuremethylester, und nicht weniger als 12 Gew.-%, aber nicht mehr als 90 Gew.-% 1,3-Dimethyl-2-imidazolidinon, wobei
das Gewichtsverhältnis von 1,3-Dimethyl-2-imidazolidinon zu Ölsäuremethylester (1,3-Dimethyl-2-imidazolidinon : Ölsäuremethylester) in einem Bereich von 1 : 0,03 bis 1 : 2 liegt.

2. Die emulgierbare Konzentratzusammensetzung gemäß Anspruch 1, die ferner ein Formulierungshilfsmittel in einer Menge von nicht mehr als 5 Gew.-%, bezogen auf die gesamte Menge, umfasst und im Wesentlichen aus der hydrophoben agrochemisch aktiven Verbindung, der grenzflächenaktiven Verbindung, dem aromatischen Kohlenwasserstofflösungsmittel, Ölsäuremethylester, 1,3-Dimethyl-2-imidazolidinon und dem Formulierungshilfsmittel besteht.

3. Die emulgierbare Konzentratzusammensetzung gemäß Anspruch 1 oder 2, wobei das Gewichtsverhältnis von 1,3-Dimethyl-2-imidazolidinon zu dem aromatischen Kohlenwasserstofflösungsmittel in einem Bereich von 1 : 0,02 bis 1 : 1,5 liegt.

4. Die emulgierbare Konzentratzusammensetzung gemäß einem der Ansprüche 1 bis 3, wobei das Gewichtsverhältnis von 1,3-Dimethyl-2-imidazolidinon zu Ölsäuremethylester in einem Bereich von 1 : 0,05 bis 1 : 1,5 liegt.

5. Die emulgierbare Konzentratzusammensetzung gemäß einem der Ansprüche 1 bis 4, wobei die grenzflächenaktive Verbindung aus einer anionischen grenzflächenaktiven Verbindung und einer nicht-ionischen grenzflächenaktiven Verbindung zusammengesetzt ist.

6. Die emulgierbare Konzentratzusammensetzung gemäß Anspruch 5, wobei die anionische grenzflächenaktive Verbindung ein Alkylarylsulfonsäuresalz ist.

7. Die emulgierbare Konzentratzusammensetzung gemäß einem der Ansprüche 1 bis 6, wobei die hydrophobe agrochemisch aktive Verbindung eine als Insektizid wirksame Verbindung vom Neonicotinoid-Typ ist.

8. Die emulgierbare Konzentratzusammensetzung gemäß einem der Ansprüche 1 bis 6, wobei die hydrophobe agrochemisch aktive Verbindung mindestens eine Verbindung, ausgewählt aus der Gruppe bestehend aus als Herbizid wirksamen Verbindungen vom Sulfonylharnstoff-Typ und als Herbizid wirksamen Verbindungen vom Dicarboxyimid-Typ, ist.

9. Eine mit Wasser verdünnte Flüssigkeit, die durch 5 bis 10.000-faches Verdünnen der emulgierbaren Konzentratzusammensetzung gemäß einem der Ansprüche 1 bis 8 mit Wasser erhalten ist.

## Revendications

1. Composition de concentré émulsionnable comprenant :
pas moins de 0,5 % en masse mais pas plus de 50 % en masse d'un composé hydrophobe à action agrochimique choisi parmi les composés à action herbicide de dicarboxyimide, des composés à action herbicide de sulfonylurée, la 1-[(2-propénylthio)carbonyl]-2-(1-méthyléthyl)-4-(2-méthylphényl)-5-amino-1H-pyrazol-3-one, des composés à action insecticide de néonicotinoïde et le 2,6-dichloro-4-(3,3-dichloroallyloxy)phényl-3-[5-(trifluorométhyl)-2-pyridyloxy]propyl-éther,
pas moins de 5 % en masse mais pas plus de 15 % en masse d'un tensioactif,
pas moins de 2 % en masse mais pas plus de 60 % en masse d'un solvant hydrocarboné aromatique,
pas moins de 2 % en masse mais pas plus de 40 % en masse d'oléate de méthyle, et
pas moins de 12 % en masse mais pas plus de 90 % en masse de 1,3-diméthyl-2-imidazolidinone, dans laquelle
le rapport massique de 1,3-diméthyl-2-imidazolidinone à oléate de méthyle (1,3-diméthyl-2-imidazolidinone : oléate de méthyle) se trouve dans un intervalle de 1 : 0,03 à 1 : 2.

2. Composition de concentré émulsionnable selon la revendication 1 qui comprend de plus un adjuvant de formulation dans une quantité d'au plus 5 % en masse rapportée à la quantité totale et consiste essentiellement en le composé hydrophobe à action agrochimique, le tensioactif, le solvant hydrocarboné aromatique, l'oléate de méthyle, la 1,3-diméthyl-2-imidazolidinone et l'adjuvant de formulation.

3. Composition de concentré émulsionnable selon la revendication 1 ou 2, dans laquelle le rapport massique de 1,3-diméthyl-2-imidazolidinone au solvant hydrocarboné aromatique se trouve dans un intervalle de 1 : 0,02 à 1 : 1,5.

4. Composition de concentré émulsionnable selon l'une quelconque des revendications 1 à 3, dans laquelle le rapport massique de 1,3-diméthyl-2-imidazolidinone à oléate de méthyle se trouve dans un intervalle de 1 : 0,05 à 1 : 1,5.

5. Composition de concentré émulsionnable selon l'une quelconque des revendications 1 à 4, dans laquelle le tensioactif est constitué d'un tensioactif anionique et d'un tensioactif non ionique.

6. Composition de concentré émulsionnable selon la revendication 5, dans laquelle le tensioactif anionique est un sel d'acide alkylarylsulfonique.

7. Composition de concentré émulsionnable selon l'une quelconque des revendications 1 à 6, dans laquelle le composé hydrophobe à action agrochimique est un composé à action insecticide de néonicotinoïde.

8. Composition de concentré émulsionnable selon l'une quelconque des revendications 1 à 6, dans laquelle le composé hydrophobe à action agrochimique est au moins un composé choisi dans le groupe constitué de composés à action herbicide de sulfonylurée et de composés à action herbicide de dicarboxyimide.

9. Liquide dilué dans l'eau qui est obtenu par dilution de la composition de concentré émulsionnable selon l'une quelconque des revendications 1 à 8 avec de l'eau de 5 à 10 000 fois.
